# EUROPEAN PATENT SPECIFICATION

(11) **EP 3 848 122 B1**
(45) Date of publication and mention of the grant of the patent: **10.08.2022**
(21) Application number: 20191677.2
(22) Date of filing: 19.08.2020
(51) Int. Cl.: B01J 35/00, B01J 23/18, B01J 23/22, B01J 27/24, C01B 21/06, C02F 1/30, B01J 37/02, B01J 37/04, B01J 37/08, B01J 37/06, B01J 35/02, C01B 32/198

(54) **VISIBLE LIGHT CATALYTIC MATERIAL AND PREPARATION METHOD AND APPLICATION THEREOF**
KATALYSATORMATERIAL FÜR SICHTBARES LICHT UND VERFAHREN ZU SEINER HERSTELLUNG UND SEINE VERWENDUNG
MATÉRIAU CATALYTIQUE POUR LUMIÈRE VISIBLE ET SON PROCÉDÉ DE PRÉPARATION ET SON APPLICATION

(30) Priority: 09.01.2020 CN 202010020942
(43) Date of publication of application: 14.07.2021
(73) Proprietor: Nankai University, Tianjin 300350 (CN)
(72) Inventor: YU, Han, Tianjin, 300350 (CN); YU, Hongbing, Tianjin, 300350 (CN); WANG, Meiyang, Tianjin, 300350 (CN); DONG, Heng, Tianjin, 300350 (CN)
(74) Representative: Weickmann & Weickmann PartmbB

(56) References cited:
- CN-A- 107 233 906
- CN-A- 109 395 764
- CN-A- 111 389 450
- CN-A- 111 762 880
- US-A1- 2009 263 314
- US-A1- 2015 068 906

## Description

### TECHNICAL FIELD

The present invention relates to the technical field of catalysts, and in particular to a visible light catalytic material and a preparation method and application thereof.

### BACKGROUND

Photocatalysis technology can directly and effectively use solar energy to degrade pollutants in the environment, showing great application potential in solving environmental pollution and energy shortage. However, since about 45% of sunlight is visible light, and the proportion of ultraviolet light is less than 5%, in order to use sunlight more efficiently, the development of photocatalysts with visible light catalytic activity is essential for the development and application of photocatalytic technology. g-C₃N₄ as a new non-metallic photocatalytic material, it is easy to prepare, has excellent physical and chemical stability and good photoelectric performance. Compared with traditional TiO₂ photocatalyst, the absorption spectrum range of g-C₃N₄ is wider, and it can play a photocatalytic role only under ordinary visible light. However, the single g-C₃N₄ photocatalyst has the problems of low utilization rate of visible light, low separation efficiency of photogenerated electrons and high recombination rate, resulting in low photocatalytic efficiency.

By improving the g-C₃N₄ photocatalyst, its catalytic performance can be improved. At present, the methods for improving the g-C₃N₄ photocatalyst mainly include morphology and structure control, non-metallic doping, metal doping, precious metal deposition, and compounding with other semiconductor materials. For example, CN107233906 discloses the formation of a Z-type heterojunction material comprising g-C₃N₄ and BIV^{O} ₄- However, the existing improvement methods for g-C₃N₄ photocatalysts still generally have the problems of high recombination rate of photogenerated electrons and holes and low light utilization rate, which lead to low photocatalytic efficiency of the photocatalyst.

### SUMMARY

The object of the present invention is to provide a visible light catalytic material and a preparation method and application thereof. The visible light catalytic material provided by the present invention has excellent visible light catalytic performance and high recovery rate.

In order to achieve the above object of the invention, the present invention provides the following technical solutions:
The present invention provides a visible light catalytic material, including a carrier and an active component supported on the surface of the carrier; the carrier is a conductive ceramic; the active component is P-C₃N₄, reduced graphene oxide and bismuth vanadate; raw materials for preparing the conductive ceramics include graphene, aluminum oxide and zinc oxide.

Preferably, the mass ratio of the P-C₃N₄, reduced graphene oxide and bismuth vanadate is 1 (0.005-0.006): (2.5-3.5). The mass ratio of the graphene, aluminum oxide and zinc oxide is 1: (8-9): (1-2).

The method for preparing the conductive ceramic includes mixing graphene, aluminum oxide and zinc oxide, sequentially subjecting to crushing, tableting molding and sintering to obtain a conductive ceramic.

Preferably, the sintering temperature is 1350-1360°C, and the time is 0.9-1.1h.

The present invention provides a method for preparing a visible light catalytic material according to the above technical solution, including the following steps:
Mixing P-C₃N₄, graphene oxide and water and performing modification treatment to obtain P-C₃N₄/ GO;
Mixing the P-C₃N₄/GO, ammonium metavanadate, water and an acetic acid solution of bismuth nitrate to perform a recombination reaction to obtain P-C₃N₄/ RGO/BiVO₄;
Mixing the P-C₃N₄/RGO/BiVO₄, a binder and a solvent, and coating the resulting mixed liquid on the surface of the conductive ceramic to obtain a visible light catalytic material.

Preferably, the temperature of the modification treatment is 5-40°C, and the time is 9-13h.

Preferably, the temperature of the recombination reaction is 135-145°C, and the time is 11-13h.

Preferably, the ratio of the mass of the mixed liquid to the area of the conductive ceramic is (1-2.5) mg: 1cm².

The invention also provides an application of the visible light catalytic material according to the above technical solution or the visible light catalytic material prepared by the preparation method according to the above technical solution in sewage treatment.

The present invention provides a visible light catalytic material, including a carrier and an active component supported on the surface of the carrier; the carrier is a conductive ceramic; the active component is P-C₃N₄, reduced graphene oxide and bismuth vanadate; raw materials for preparing the conductive ceramics include graphene, aluminum oxide and zinc oxide. The visible light catalytic material provided by the present invention is a Z-type heterojunction photocatalyst, and its electron transfer path is similar to the English letter Z. Both P-C₃N₄ and BiVO₄ can be excited by visible light to generate photogenerated electrons and holes. The VB potential of the semiconductor P-C₃N₄ is more positive than that of BiVO₄, and the CB potential of the semiconductor BiVO₄ is more negative than that of P-C₃N₄, the electrons in the conduction band of BiVO₄ will be transferred to the valence band of P-C₃N₄ and recombined with its holes; at this time, the holes at the VB potential of the semiconductor P-C₃N₄ are more capable of oxidizing, the electrons at the CB potential of the semiconductor BiVO₄ are more capable of reducing; at the same time, the reduced graphene oxide (RGO) can be used as an electron transfer medium to enhance the above process; the conductive ceramic plays a supporting role, and the conductive ceramic has conductive properties and will also play a role of transferring electrons, which can improve the photocatalytic efficiency and recovery efficiency of visible light catalytic materials. Therefore, the visible light catalytic material prepared by the present invention has excellent visible light catalysis efficiency and recovery efficiency.

### BRIEF DESCRIPTION OF THE DRAWINGS

FIG. 1 is a diagram of the catalytic mechanism of a visible light catalytic material;
FIG. 2 is a graph showing the removal effect of norfloxacin by the visible light catalytic materials prepared in Examples 1-3 and Comparative Examples 1-2.

### DESCRIPTION OF THE EMBODIMENTS

The present invention provides a visible light catalytic material, including a carrier and an active component supported on the surface of the carrier; the carrier is a conductive ceramic; the active component is P-C₃N₄, graphene oxide and bismuth vanadate; raw materials for preparing the conductive ceramics include graphene, aluminum oxide and zinc oxide.

In the present invention, unless otherwise specified, all raw material components are commercially available products well known to those skilled in the art.

In the present invention, the mass ratio of the P-C₃N₄, graphene oxide and bismuth vanadate is preferably 1:(0.005-0.006) :(2.5-3.5), more preferably 1:(0.005-0.006) :(3-3.5). In the present invention, the bismuth vanadate is preferably monoclinic scheelite bismuth vanadate.

In the present invention, the mass ratio of the graphene, aluminum oxide and zinc oxide is preferably 1: (8-9): (1-2), more preferably 1: (8.5-9): (1.5-2), most preferably 1:9:2. The present invention uses a conductive ceramic of a specific composition as the carrier, which mainly plays a supporting role.

In the present invention, the preparation method of the conductive ceramic includes the following steps: mixing graphene, aluminum oxide and zinc oxide, sequentially subjecting to crushing, tableting molding and sintering to obtain a conductive ceramic.

In the present invention, the crushing is preferably ball milling, more preferably wet milling; the solvent used in the wet milling is preferably ethanol; and the ball-to-material ratio is preferably 2:1. In the present invention, the usage ratio of the graphene, aluminum oxide, and zinc oxide is preferably 1g: (8-9) g: (1-2) g: (500-600) mL, and more preferably 1g: (8.5-9) g: (1.5-2) g: (500-550) mL, most preferably 1g:9g:2g:500mL. In the present invention, the wet milling time is preferably 3-5 hours, and more preferably 4 hours.

After the completion of crushing, the present invention preferably further includes drying the obtained powder; the drying temperature is preferably 110-130°C, more preferably 120°C; the drying time is preferably 10-12h, more preferably 12h.

In the present invention, the pressure for the tableting molding is preferably 10-14MPa, more preferably 12MPa; the pressing time is preferably 3-4min. In the present invention, the size of the ceramic green body obtained by the tableting molding is preferably (2.5-3.5) cm × (1.5-2.5) cm × (0.9-1.1) mm, and more preferably 3cm × 2cm × 1mm.

In the present invention, the atmosphere of the sintering is preferably nitrogen; the rate of temperature increase of the sintering is preferably 3-7°C/min, more preferably 4-6°C/min; the temperature of the sintering is preferably 1350 -1360°C, more preferably 1360°C; the sintering time is preferably 0.9-1.1h, more preferably 1h, and the sintering time is preferably measured when the temperature rises to the temperature required for sintering. In the present invention, as the temperature increases, the powder particles having larger specific surface and higher surface energy in the ceramic green body, change in the direction of reducing the surface energy, and the material migration continues, the grain boundaries move accordingly, and the pores are gradually eliminated, causing shrinkage, so that the resulting conductive ceramic has a certain strength and density.

After the completion of sintering, the present invention preferably cools the obtained ceramic to room temperature and then sequentially performs washing and drying to obtain a conductive ceramic. In the present invention, the washing is preferably performed under ultrasonic conditions, followed by ethanol and water, respectively, and the washing time is independently preferably 20 minutes. In the present invention, the volume ratio of the ceramic to ethanol is preferably 1g: (10-30) mL. In the present invention, the drying is preferably performed in an oven; the drying temperature is preferably 70-90°C, more preferably 75-85°C, and most preferably 80°C; and the drying time is preferably 4-6h, more preferably 4.5-5.5h.

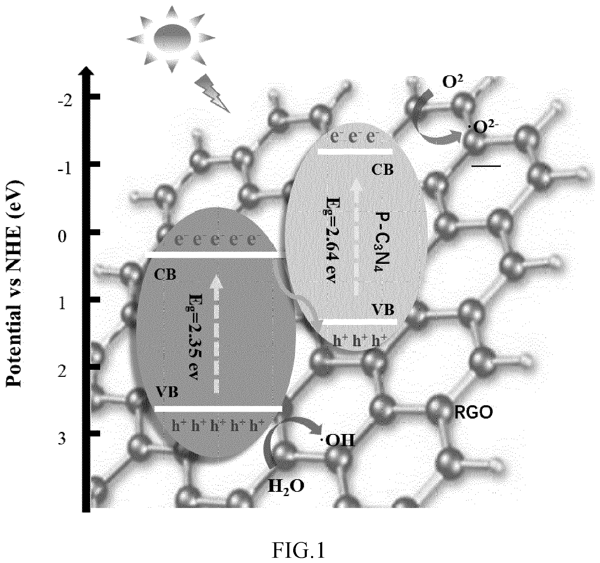

The visible light catalytic material provided by the present invention is a Z-type heterojunction photocatalyst, and its electron transfer path is similar to English letter Z. The catalytic mechanism is shown in FIG. 1, from FIG. 1, it can be seen that due to both P-C₃N₄ and BiVO₄ can be excited by visible light to generate photogenerated electrons and holes, and at the same time, the VB potential of the semiconductor P-C₃N₄ is more positive than that of BiVO₄, and the CB potential of the semiconductor BiVO₄ is more negative than that of P-C₃N₄, the electrons in the conduction band of BiVO₄ will be transferred to the valence band of P-C₃N₄ and recombined with its holes; and the holes at the VB potential of the semiconductor P-C₃N₄ are more capable of oxidizing, and the electrons at the CB potential of the semiconductor BiVO₄ are more capable of reducing; at the same time, RGO is used as an electron transfer medium to enhance the above process; the conductive ceramic mainly acts as the carrier and plays a supporting role, the active components are loaded on the surface of the conductive ceramics, the active components in the catalytic material will not be dispersed into the water during use, and no filtration treatment is required during recovery, it is convenient for recovery and has a high recovery rate; at the same time, the conducting ceramic has conductive properties, and can transfer electrons, thereby improving the photocatalytic efficiency of the photocatalytic material. Therefore, the visible light catalytic material prepared by the present invention has excellent visible light catalysis efficiency and recovery efficiency.

The present invention provides a method for preparing a visible light catalytic material according to the above technical solution, characterized in that includes the following steps:
Mixing P-C₃N₄, graphene oxide and water and performing modification treatment to obtain P-C₃N₄/ GO;
Mixing the P-C₃N₄/GO, ammonium metavanadate, water and an acetic acid solution of bismuth nitrate to perform a recombination reaction to obtain P-C₃N₄/ RGO/BiVO₄;
Mixing the P-C₃N₄/RGO/BiVO₄, a binder and a solvent, and coating the resulting mixed liquid on the surface of the conductive ceramic to obtain a visible light catalytic material.

In the present invention, P-C₃N₄, graphene oxide and water are mixed and modified to obtain P-C₃N₄/ GO.

In the present invention, the preparation method of P-C₃N₄ includes the following steps: mixing melamine, ammonium dihydrogen phosphate and water, sequentially performing polymerization reaction, drying and calcining to obtain P-C₃N₄. In the present invention, the mass ratio of the melamine, ammonium dihydrogen phosphate and water is preferably 1g: (0.1-0.12) g: (5-8) mL, more preferably 1g: (0.1-0.12) g: (5-8) mL, most preferably 3g:0.35g:20mL.

In the present invention, the method of mixing the melamine, ammonium dihydrogen phosphate, and water is preferably to disperse melamine in water, add ammonium dihydrogen phosphate to the resulting suspension and perform ultrasonic mixing. In the present invention, the water is not particularly limited, and water well known in the art may be used, such as distilled water, deionized water, or ultrapure water. In the present invention, the dispersion methods and conditions are not particularly limited. The dispersion methods and conditions well known in the art can be used to ensure that the melamine and water form a uniform suspension. In the present invention, the temperature of the ultrasonic mixing is preferably 5-40°C, more preferably 20-25°C; the time of the ultrasonic mixing is preferably 20-35 min, more preferably 28-32 min, and most preferably 30 min.

In the present invention, the temperature of the polymerization reaction is preferably 5-40°C, more preferably 20-25°C; the time of the polymerization reaction is preferably 11-13h, more preferably 11.5-12.5h, most preferably 12h.

In the present invention, preferably after the solid-liquid separation of the reaction system obtained by the polymerization reaction is performed, the obtained solid material is dried. In the present invention, the solid-liquid separation method is not particularly limited, and a solid-liquid separation method well known in the art may be used, such as filtration, suction filtration, and centrifugation. In the present invention, the drying is preferably performed in an oven; the drying temperature is preferably 90-110°C, more preferably 95-105°C, and most preferably 100°C; and the drying time is preferably 6-8h, more preferably 6-7h, and most preferably 6h.

In the present invention, the calcination is preferably performed by placing the dried material in a crucible with a lid in a muffle furnace. In the present invention, the temperature increase rate of the muffle furnace is preferably 2-3°C/ min, and more preferably 2.3-2.6°C/ min. In the present invention, the calcination temperature is preferably 500-550°C, more preferably 520-550°C, and most preferably 550°C; the calcination time is preferably 3-5 hours, and more preferably 3.5-4.5 hours, most preferably 4h; the time for the calcination is preferably measured when the temperature rises to the temperature required for the calcination. In the present invention, during the calcination process, the phosphorus-doped carbon nitride is converted to phosphorus-doped graphite phase carbon nitride (P-C₃N₄).

After the completion of the calcination, the present invention preferably further includes cooling the resulting calcined product to room temperature to obtain P-C₃N₄.

After obtaining P-C₃N₄, the present invention mixes the P-C₃N₄, graphene oxide and water, and performs modification treatment to obtain P-C₃N₄/ GO.

In the present invention, the mass ratio of P-C₃N₄ and graphene oxide is preferably 1:
(0.006-0.007), and more preferably 1: (0.0065-0.007). In the present invention, the usage ratio of the graphene oxide and water is preferably 1mg: (3-6) mL, and more preferably 1mg: 4mL.

In the present invention, the method of mixing the P-C₃N₄, graphene oxide and water is preferably to perform the first ultrasonic mixing of graphene oxide and water and add P-C₃N₄ to the resulting mixture to perform the second ultrasonic mixing. In the present invention, the temperature of the first ultrasonic mixing is preferably 5-40°C, more preferably 20-25°C; the time of the first ultrasonic mixing is preferably 1-2h, more preferably 1h. In the present invention, the temperature of the second ultrasonic mixing is preferably 5-40°C, more preferably 20-25°C; the time of the second ultrasonic mixing is preferably 0.5-1h, more preferably 0.5h.

In the present invention, the temperature of the modification treatment is preferably 5-40°C, more preferably 20-25°C; the time of the modification treatment is preferably 10-12h, more preferably 12h.

After the completion of the modification treatment, the present invention preferably further includes drying the obtained compound. In the present invention, the drying is preferably performed in an oven; the drying temperature is preferably 90-110°C, more preferably 95-105°C, and most preferably 100°C; and the drying time is preferably 6-8h, more preferably 6-7h, and most preferably 6h.

After obtaining P-C₃N₄/ GO, the present invention mixes the P-C₃N₄/GO, ammonium metavanadate, water and acetic acid solution of bismuth nitrate to perform a recombination reaction, to obtain P-C₃N₄/ RGO/ BiVO₄.

In the present invention, the concentration of bismuth nitrate in the acetic acid solution of bismuth nitrate is preferably 2-3mol/L, and more preferably 2.5mol/L. In the present invention, the usage ratio of the ammonium metavanadate and water is preferably 1mmol: (10-15) mL, and more preferably 1mmol:15mL. In the present invention, the usage ratio of the P-C₃N₄/GO, ammonium metavanadate and bismuth nitrate is preferably 1g: (8-12) mmol: (8-12) mmol, more preferably 1g: (9-11) mmol: (9-11) mmol, most preferably 1g:10mmol:10mmol. The present invention can promote the better formation of the composite by controlling the proportion of each raw material, without the interference of the raw materials and the waste of the raw materials, thereby improving the photocatalytic efficiency and recovery efficiency of the photocatalytic material.

In the present invention, the method of mixing the P-C₃N₄/ GO, ammonium metavanadate, water and the acetic acid solution of bismuth nitrate is preferably to perform the ultrasonic mixing of P-C₃N₄/GO, ammonium metavanadate and water to obtain a suspension, and dropwise add the acetic acid solution of bismuth nitrate to the suspension under stirring and mixing. In the present invention, the temperature of the ultrasonic mixing is preferably 5-40°C, more preferably 20-25°C; the time is preferably 25-35 min, and more preferably 30min. In the present invention, the rotation speed of the stirring and mixing is not particularly limited, and a rotation speed well known in the art may be used. In the present invention, the dropping speed is preferably 25-35g/min, more preferably 27-32g/min, and most preferably 30g/min.

In the present invention, the recombination reaction is preferably carried out in an autoclave, the temperature of the recombination reaction is preferably 135-145°C, more preferably 140°C; the time of the recombination reaction is preferably 11-13h, more preferably 12h. The present invention adopts the above reaction conditions to perform a recombination reaction, which can reduce graphene oxide (GO) to reduced graphene oxide (RGO), and at the same time is beneficial to the formation of a stable composite of three types of materials of P-C₃N₄, RGO and BiVO₄, thereby improving the catalytic performance of the photocatalytic material.

After the completion of the recombination reaction, the present invention preferably further includes after solid-liquid separation of the obtained reaction system, and then washing and drying the obtained solid material. In the present invention, the solid-liquid separation method is not particularly limited, and a solid-liquid separation method well known in the art may be used, such as filtration, suction filtration, and centrifugation. In the present invention, the washing is preferably performed sequentially in ethanol and water, and the number of times of washing is independently preferably 2-4 times. In the present invention, the washing method is not particularly limited, and a washing method well known to those skilled in the art may be used. In the present invention, the drying is preferably performed in an oven; the drying temperature is preferably 60-80°C, more preferably 65-75°C, and most preferably 100°C; and the drying time is preferably 8-10h, more preferably 8.5-9.5h, most preferably 9h.

After obtaining P-C₃N₄/RGO/BiVO₄, the present invention mixes the P-C₃N₄/RGO/BiVO₄, a binder and a solvent, and coats the obtained mixed liquid on the surface of the conductive ceramic to obtain a visible light catalytic material.

In the present invention, the binder preferably includes a Nafion solution (perfluorosulfonic acid type polymer solution). In the present invention, the solvent is preferably ethanol. In the present invention, the usage ratio of the P-C₃N₄/RGO/BiVO₄, the binder and the solvent is preferably 10mg: (45-55) µL: (0.8-1.2) mL, more preferably 10mg: 50µL: 1mL. In the present invention, the solvent can make the binder and P-C₃N₄/RGO/BiVO₄ evenly dispersed, while the binder is firmly combined with P-C₃N₄/RGO/BiVO₄ by the conductive ceramic.

In the present invention, the coating method is preferably a dip coating method. In the present invention, the operation of the dip coating method is not particularly limited, and the coating operation of the dip coating method well known in the art may be used. In the present invention, the ratio of the mass of the mixed liquid to the area of the conductive ceramic is preferably (1-2.5) mg: 1cm², more preferably (1.5-2.5) mg: 1cm², and most preferably (1.5-2) mg: 1cm².

After the completion of the coating, the present invention preferably dries the obtained wet film; the drying temperature is preferably 70-90°C, more preferably 80°C; the drying time is preferably 10-18h, more preferably 12-14 hours.

The visible light catalytic material provided by the present invention is a Z-type heterojunction photocatalyst, and its electron transfer path is similar to English letter Z. Both P-C₃N₄ and BiVO₄ can be excited by visible light to generate photogenerated electrons and holes, and the VB potential of the semiconductor P-C₃N₄ is more positive than that of BiVO₄, and the CB potential of the semiconductor BiVO₄ is more negative than that of P-C₃N₄, the electrons in the conduction band of BiVO₄ will be transferred to the valence band of P-C₃N₄ and recombined with its holes; at the moment, the holes at the VB potential of the semiconductor P-C₃N₄ are more capable of oxidizing, and the electrons at the CB potential of the semiconductor BiVO₄ are more capable of reducing; at the same time, RGO can be used as an electron transfer medium to enhance the above process; the conductive ceramic mainly acts as the carrier and plays a supporting role, the active components are loaded on the surface of the conductive ceramics, the active components in the catalytic material will not be dispersed into the water during use, and no filtration treatment is required during recovery, it is convenient for recovery and has a high recovery rate; while the conducting ceramic has conductive properties, can transfer electrons, thereby improving the photocatalytic efficiency of the photocatalytic material. Therefore, the visible light catalytic material prepared by the present invention has excellent visible light catalysis efficiency and recovery efficiency.

The present invention provides the use of the visible light catalytic material according to the above technical solution or the visible light catalytic material prepared by the preparation method according to the above technical solution in sewage treatment, and more preferably in treating organic pollutants contained in sewage.

In the present invention, the usage ratio of the active component in the visible light catalytic material and the sewage is preferably 1mg: (1-2) mL.

Conventional photocatalysts used in sewage treatment process are dispersed in water in the form of powder. The photocatalysts are usually recovered by filtration. However, filtration cannot completely filter the photocatalyst, and the post-treatment is complicated, the recovery rate is low, and reuse is difficult. The photocatalytic material provided by the present invention loads the active component on the surface of the conductive ceramic. During the application process, the active component in the catalytic material will not be dispersed into the water, and no filtration treatment is required during recovery, which is convenient for recovery and has a high recovery rate; at the same time, the conductive ceramics have electrical conductivity, can transfer electrons, and have high photocatalytic efficiency.

The technical solutions in the present invention will be described clearly and completely in combination with the examples in the present invention. Obviously, the described examples are only a part of the examples of the present invention, but not all the examples. Based on the examples of the present invention, all other examples obtained by a person of ordinary skill in the art without making creative efforts fall within the protection scope of the present invention.

### Example 1:

Dispersed melamine (3g) in deionized water (20mL), added ammonium dihydrogen phosphate (0.35g) to the resulting suspension and ultrasonically mixed for 30min, then stirred at room temperature (25°C) for 12h, then placed it in an oven to dry at 100°C for 6h, placed it in a crucible with a lid, raised the temperature to 550 °C at a rate of 2.5 °C/min, then calcined for 4h, and cooled to room temperature to obtain P-C₃N₄; Graphene oxide (5mg) and deionized water (20mL) were ultrasonically mixed for 1h, added P-C₃N₄ (0.75g) and ultrasonically mixed for 0.5h, stirred at room temperature for 12h, and then placed in an oven at 100 °C to dry for 6h to obtain P-C₃N₄/GO;
Bismuth nitrate (Bi(NO₃)₃·5H₂O, 2mmol) was dissolved in glacial acetic acid (5mL) to obtain an acetic acid solution of bismuth nitrate, P-C₃N₄/GO (0.2g), ammonium metavanadate (NH₄VO₄, 2mmol) and 30mL deionized water were ultrasonically mixed for 30min, to obtain a suspension, the acetic acid solution of the bismuth nitrate was added dropwise to the suspension at a uniform rate of 30g/min under the stirring rate of 100r/min, the resulting mixture was transferred to an autoclave, and reacted at 140 °C for 12h, then the resulting reaction system was filtered, and the resulting precipitate was respectively washed with ethanol and deionized water repeatedly 4 times to obtain P-C₃N₄/RGO/BiVO₄;
Put aluminum oxide (0.9g), zinc oxide (0.2g) and graphene (0.1g) into a ball mill jar, added ethanol (50mL) and zirconia ball (2.4g), after ball milling for 4h, dried at 120°C for 12 hours, pressed the resulting powder into a ceramic sheet with a thickness × length × width of 3cm × 2cm × 1cm, heated it to 1360°C at a rate of 2.5°C/min in a nitrogen atmosphere, hold it for 1h, and then cooled to room temperature. The obtained ceramics were ultrasonically washed in deionized water and ethanol for 20 minutes, and dried to constant weight at 80°C to obtain conductive ceramics; P-C₃N₄/RGO/BiVO₄ (10mg), Nafion solution (50µL) and ethanol (1mL) were mixed evenly, and the resulting mixture was coated on the surface of the conductive ceramic, wherein the ratio of the mass of the mixed solution to the area of the conductive ceramic was (1-2.5) mg: 1cm², and then dried at 80°C for 12 hours to obtain a visible light catalytic material.

### Example 2:

Dispersed melamine (3g) in deionized water (20mL), added ammonium dihydrogen phosphate (0.35g) to the resulting suspension and ultrasonically mixed for 30min, then stirred at room temperature (25°C) for 12h, then placed it in an oven to dry at 100°C for 6h, placed it in a crucible with a lid, raised the temperature to 550 °C at a rate of 2.5 °C/min, then calcined for 4h, and cooled to room temperature to obtain P-C₃N₄; Graphene oxide (5mg) and deionized water (20mL) were ultrasonically mixed for 1h, added P-C₃N₄ (0.75g) and ultrasonically mixed for 0.5h, stirred at room temperature for 12h, and then placed in an oven at 100 °C to dry for 6h to obtain P-C₃N₄/GO;
Bismuth nitrate (Bi(NO₃)₃·5H₂O, 2mmol) was dissolved in glacial acetic acid (5mL) to obtain an acetic acid solution of bismuth nitrate, P-C₃N₄/GO (0.2g), ammonium metavanadate (NH₄VO₄, 2mmol) and 30mL deionized water were ultrasonically mixed for 30min, to obtain a suspension, the acetic acid solution of the bismuth nitrate was added dropwise to the suspension at a uniform rate of 30g/min under the stirring rate of 100r/min, the resulting mixture was transferred to an autoclave, and reacted at 140°C for 12h, then the resulting reaction system was filtered, and the resulting precipitate was respectively washed with ethanol and deionized water repeatedly 4 times to obtain P-C₃N₄/RGO/BiVO₄;
Put aluminum oxide (0.9g), zinc oxide (0.2g) and graphene (0.1g) into a ball mill jar, added ethanol (50mL) and zirconia ball (2.4g), after ball milling for 4h, dried at 120°C for 12 hours, pressed the resulting powder into a ceramic sheet with a thickness × length × width of 3cm × 2cm × 1cm, heated it to 1360°C at a rate of 2.5°C/min in a nitrogen atmosphere, hold it for 1h, and then cooled to room temperature. The obtained ceramics were ultrasonically washed in deionized water and ethanol for 20 minutes, and dried to constant weight at 80°C to obtain conductive ceramics; P-C₃N₄/RGO/BiVO₄ (10mg), Nafion solution (50µL) and ethanol (1mL) were mixed evenly, and the resulting mixture was coated on the surface of the conductive ceramic, wherein the ratio of the mass of the mixed solution to the area of the conductive ceramic was (1-2.5) mg: 1cm², and then dried at 80°C for 12 hours to obtain a visible light catalytic material.

### Example 3

Dispersed melamine (3g) in deionized water (20mL), added ammonium dihydrogen phosphate (0.35g) to the resulting suspension and ultrasonically mixed for 30min, then stirred at room temperature (25°C) for 12h, then placed it in an oven to dry at 100°C for 6h, placed it in a crucible with a lid, raised the temperature to 550 °C at a rate of 2.5 °C/min, then calcined for 4h, and cooled to room temperature to obtain P-C₃N₄; Graphene oxide (5mg) and deionized water (20mL) were ultrasonically mixed for 1h, added P-C₃N₄ (0.75g) and ultrasonically mixed for 0.5h, stirred at room temperature for 12h, and then placed in an oven at 100 °C to dry for 6h to obtain P-C₃N₄/GO;
Bismuth nitrate (Bi(NO₃)₃·5H₂O, 2.5mmol) was dissolved in glacial acetic acid (5mL) to obtain an acetic acid solution of bismuth nitrate, P-C₃N₄/GO (0.2g), ammonium metavanadate (NH₄VO₄, 2.5mmol) and 30mL deionized water were ultrasonically mixed for 30min, to obtain a suspension, the acetic acid solution of the bismuth nitrate was added dropwise to the suspension at a uniform rate of 30g/min under the stirring rate of 100r/min, the resulting mixture was transferred to an autoclave, and reacted at 140 °C for 12h, then the resulting reaction system was filtered, and the resulting precipitate was respectively washed with ethanol and deionized water repeatedly 4 times to obtain P-C₃N₄/RGO/BiVO₄;
Put aluminum oxide (0.9g), zinc oxide (0.2g) and graphene (0.1g) into a ball mill jar, added ethanol (50mL) and zirconia ball (2.4g), after ball milling for 4h, dried at 120°C for 12 hours, pressed the resulting powder into a ceramic sheet with a thickness × length × width of 3cm × 2cm × 1cm, heated it to 1360°C at a rate of 2.5°C/min in a nitrogen atmosphere, hold it for 1h, and then cooled to room temperature. The obtained ceramics were ultrasonically washed in deionized water and ethanol for 20 minutes, and dried to constant weight at 80°C to obtain conductive ceramics; P-C₃N₄/RGO/BiVO₄ (10mg), Nafion solution (50µL) and ethanol (1mL) were mixed evenly, and the resulting mixture was coated on the surface of the conductive ceramic, and then dried at 80°C for 12 hours to obtain a visible light catalytic material.

### Comparative Example 1

The visible light catalytic material was prepared according to the method of Example 1, which is different from Example 1 in that commercially available g-C₃N₄ was used instead of P-C₃N₄ to obtain the visible light catalytic material with g-C₃N₄/RGO/BiVO₄ as the active component.

### Comparative Example 2

The visible light catalytic material was prepared according to the method of Example 1, which is different from Example 1 in that during the preparation of P-C₃N₄, urea was used instead of melamine, and diammonium hydrogen phosphate was used instead of ammonium dihydrogen phosphate.

### Test case

Examples 1 to 3 (10 mg ceramic sheet with active component of P-C₃N₄/RGO/BiVO₄, thickness × length × width of 3cm × 2cm × 1cm), Comparative Example 1 ( 10mg ceramic tablets with active component of g-C₃N₄/RGO/BiVO₄, thickness × length × width of 3cm × 2cm × 1cm), Comparative Example 2 (10mg ceramic tablets with active component of P-C₃N₄/RGO/BiVO₄, thickness × length × width of 3cm × 2cm × 1cm) were respectively placed in the sewage containing norfloxacin, irradiated using a 300W xenon lamp at a distance of 5cm, sampled 1mL every 30min and measured the concentration of norfloxacin at 273nm with an ultraviolet-visible spectrophotometer; Wherein, the initial concentration of norfloxacin was 20mg/L.

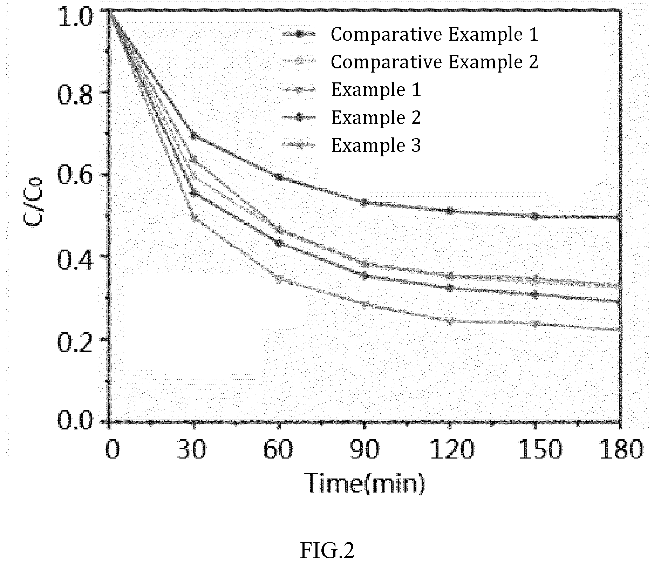

The test results are shown in FIG. 2, wherein the abscissa is time (min) and the ordinate is C/Co (ie, real-time concentration of norfloxacin/initial concentration of norfloxacin). It can be seen from FIG. 2 that after treating the sewage containing norfloxacin with the visible light catalytic materials prepared in Examples 1-3 and Comparative Examples 1-2 of the present invention for 2 hours, the removal rates of norfloxacin are 77.72% and 70.92%, 66.92%, 50.33% and 67.33%, respectively, indicating that the visible light catalytic materials provided by the present invention have excellent removal effect of norfloxacin.

The above is only a preferred embodiment of the present invention, it should be noted that for those of ordinary skilled in the art, without departing from the principles of the present invention, can also make several improvements and retouches, these improvements and retouches should also be regarded as the protection scope of the present invention.

The invention provides a visible light catalytic material and a preparation method and application thereof, which belongs to the technical field of catalysts. The visible light catalytic material provided by the present invention includes a carrier and an active component supported on the surface of the carrier; the carrier is a conductive ceramic; the active component is P-C₃N₄, graphene oxide and bismuth vanadate; raw materials for preparing the conductive ceramics include graphene, aluminum oxide and zinc oxide. In the visible light catalytic material provided by the present invention, both P-C₃N₄ and BiVO₄ can be excited by visible light to generate photogenerated electrons and holes, and the reducing electrons on BiVO₄ are transferred to P-C₃N₄, and recombined with its oxidizing holes, RGO can be used as an electron transport medium to enhance the above process. The present invention uses active components of specific composition and carrier to cooperate to provide the visible light catalytic material with excellent visible light catalysis efficiency and recovery efficiency.

## Claims

1. A visible light catalytic material, **characterized in that** it comprises a carrier and an active component supported on a surface of the carrier, wherein
the carrier is a conductive ceramic;
the active component is P-C₃N₄/reduced graphene oxide/BiVO₄;
the conductive ceramic is prepared by a process comprising mixing graphene, aluminum oxide and zinc oxide, sequentially crushing the resulting mixture, tableting molding and sintering to obtain conductivity ceramics, wherein a mass ratio of the graphene, aluminum oxide and zinc oxide is 1: (8-9): (1-2);
the active component is prepared by a process comprising mixing P-C₃N₄, graphene oxide and water and performing modification treatment to obtain P-C₃N₄/GO; mixing the P-C₃N₄/GO, ammonium metavanadate, water and an acetic acid solution of bismuth nitrate to perform a recombination reaction to obtain P-C₃N₄/ RGO/BiVO₄, wherein the P-C₃N₄ is prepared by a process comprising mixing melamine, ammonium dihydrogen phosphate and water, sequentially performing polymerization reaction, drying and calcining to obtain the P-C₃N₄.

2. The visible light catalytic material according to claim 1, **characterized in that** a mass ratio of the P-C₃N₄, graphene oxide, and bismuth vanadate is 1: (0.005-0.006): (2.5-3.5).

3. The visible light catalytic material according to claim 1, **characterized in that** the sintering temperature is 1350-1360 °C and the time is 0.9-1.1h.

4. A method for preparing a visible light catalytic material according to any one of claims 1 to 3, **characterized in that** it comprises the following steps:
mixing P-C₃N₄, graphene oxide and water and performing modification treatment to obtain P-C₃N₄/GO;
mixing the P-C₃N₄/GO, ammonium metavanadate, water and an acetic acid solution of bismuth nitrate to perform a recombination reaction to obtain P-C₃N₄/reduced graphene oxide/BiVO₄; and
mixing the P-C₃N₄/reduced graphene oxide/BiVO₄, a binder and a solvent, and coating the resulting mixed liquid on the surface of the conductive ceramic to obtain a visible light catalytic material;
wherein, the P-C₃N₄ is prepared by a process comprising mixing melamine, ammonium dihydrogen phosphate and water, sequentially performing polymerization reaction, drying and calcining to obtain the P-C₃N₄.

5. The method according to claim 4, **characterized in that** the temperature of the modification treatment is 5-40°C and the time is 9-13h.

6. The method according to claim 4, **characterized in that** the temperature of the recombination reaction is 135-145°C and the time is 11-13h.

7. The method according to claim 4, **characterized in that** a ratio of the mass of the mixed liquid to the area of the conductive ceramic is (1-2.5) mg: 1cm².

8. Use of the visible light catalytic material according to any one of claims 1-3 or the visible light catalytic material prepared by the preparation method according to any one of claims 4-7 in sewage treatment.

## Patentansprüche

1. Katalytisches Material für sichtbares Licht, **dadurch gekennzeichnet, dass** es einen Träger und eine aktive Komponente, die auf einer Oberfläche des Trägers getragen wird, umfasst, wobei
der Träger eine leitfähige Keramik ist;
die aktive Komponente P-C₃N₄/reduziertes Graphenoxid/BiVO₄ ist;
die leitfähige Keramik durch ein Verfahren hergestellt wird, umfassend: Mischen von Graphen, Aluminiumoxid und Zinkoxid, aufeinanderfolgend Zerkleinern der erhaltenen Mischung, Tablettieren, Formen und Sintern, um leitfähige Keramiken zu erhalten, wobei ein Massenverhältnis von Graphen, Aluminiumoxid und Zinkoxid 1: (8-9): (1-2) beträgt;
die aktive Komponente durch ein Verfahren hergestellt wird, umfassend: Mischen von P-C₃N₄, Graphenoxid und Wasser und Durchführen einer Modifikationsbehandlung, um P-C₃N₄/GO zu erhalten, Mischen von P-C₃N₄/GO, Ammoniummetavanadat, Wasser und einer Essigsäurelösung von Bismutnitrat, um eine Rekombinationsreaktion durchzuführen, um P-C₃N₄/ RGO/BiVO₄ zu erhalten, wobei das P-C₃N₄ durch ein Verfahren hergestellt wird, umfassend: Mischen von Melamin, Ammoniumdihydrogenphosphat und Wasser, aufeinanderfolgend Durchführen einer Polymerisationsreaktion, Trocknen und Kalzinieren, um das P-C₃N₄ zu erhalten.

2. Katalytisches Material für sichtbares Licht nach Anspruch 1, **dadurch gekennzeichnet, dass** das Massenverhältnis von P-C₃N₄, Graphenoxid und Bismutvanadat 1: (0,005-0,006): (2,5-3,5) beträgt.

3. Katalytisches Material für sichtbares Licht nach Anspruch 1, **dadurch gekennzeichnet, dass** die Sintertemperatur 1350-1360 °C und die Zeit 0,9-1,1 Stunden beträgt.

4. Verfahren zur Herstellung eines katalytischen Materials für sichtbares Licht nach einem der Ansprüche 1-3, **dadurch gekennzeichnet, dass** es die folgenden Schritte umfasst:
Mischen von P-C₃N₄, Graphenoxid und Wasser und Durchführen einer Modifikationsbehandlung, um P-C₃N₄/GO zu erhalten;
Mischen von P-C₃N₄/GO, Ammoniummetavanadat, Wasser und einer Essigsäurelösung von Bismutnitrat um eine Rekombinationsreaktion durchzuführen, um P-C₃N₄/reduziertes Graphenoxid/BiVO₄ zu erhalten; und
Mischen von P-C₃N₄/reduziertem Graphenoxid/BiVO₄, einem Bindemittel und einem Lösungsmittel und Auftragen der erhaltenen gemischten Flüssigkeit auf die Oberfläche der leitfähigen Keramik, um ein katalytisches Material für sichtbares Licht zu erhalten;
wobei das P-C₃N₄ durch ein Verfahren hergestellt wird, umfassend: Mischen von Melamin, Ammoniumdihydrogenphosphat und Wasser, aufeinanderfolgendes Durchführen einer Polymerisationsreaktion, Trocknen und Kalzinieren, um das P-C₃N₄ zu erhalten.

5. Verfahren nach Anspruch 4, **dadurch gekennzeichnet, dass** die Temperatur der Modifikationsbehandlung 5-40°C und die Zeit 9-13 Stunden beträgt.

6. Verfahren nach Anspruch 4, **dadurch gekennzeichnet, dass** die Temperatur der Rekombinationsreaktion 135-145°C und die Zeit 11-13 Stunden beträgt.

7. Verfahren nach Anspruch 4, **dadurch gekennzeichnet, dass** das Verhältnis der Masse der gemischten Flüssigkeit zur Fläche der leitfähigen Keramik (1-2,5) mg: 1cm² beträgt.

8. Verwendung des katalytischen Materials für sichtbares Licht nach einem der Ansprüche 1-3 oder des katalytischen Materials für sichtbares Licht, das durch das Herstellungsverfahren nach einem der Ansprüche 4-7 hergestellt wurde, in der Abwasserbehandlung.

## Revendications

1. Matériau catalytique en lumière visible, **caractérisé en ce qu'**il comprend un support et un composant actif supporté sur une surface du support, dans lequel
le support est une céramique conductrice;
le composant actif est P-C₃N₄/oxyde de graphène réduit/BiVO₄;
la céramique conductrice est préparée par un procédé comprenant le mélange de graphène, d'oxyde d'aluminium et d'oxyde de zinc, successivement le broyage du mélange résultant, le moulage par compression et le frittage pour obtenir une céramique conductrice, dans lequel un rapport massique du graphène, de l'oxyde d'aluminium et de l'oxyde de zinc est 1: ( 8-9): (1-2);
le composant actif est préparé par un procédé comprenant le mélange de P-C₃N₄, d'oxyde de graphène et d'eau et la réalisation d'un traitement de modification pour obtenir P-C₃N₄/GO; le mélange du P-C₃N₄/GO, de métavanadate d'ammonium, d'eau et d'une solution dans l'acide acétique de nitrate de bismuth pour réaliser une réaction de recombinaison pour obtenir P-C₃N₄/RGO/BiVO₄, dans lequel le P-C₃N₄ est préparé par un procédé comprenant le mélange de mélamine, de dihydrogénophosphate d'ammonium et d'eau, successivement la réalisation d'une réaction de polymérisation, d'un séchage et d'une calcination pour obtenir le P-C₃N₄.

2. Matériau catalytique en lumière visible selon la revendication 1, **caractérisé en ce qu'**un rapport massique du P-C₃N₄, de l'oxyde de graphène et du vanadate de bismuth est 1: (0,005-0,006): (2,5-3,5).

3. Matériau catalytique en lumière visible selon la revendication 1, **caractérisé en ce que** la température de frittage est 1350-1360°C et la durée est 0,9-1,1h.

4. Procédé pour préparer un matériau catalytique en lumière visible selon l'une quelconque des revendications 1 à 3, **caractérisé en ce qu'**il comprend les étapes suivantes:
le mélange de P-C₃N₄, d'oxyde de graphène et d'eau et la réalisation d'un traitement de modification pour obtenir P-C₃N₄/GO;
le mélange du P-C₃N₄/GO, de métavanadate d'ammonium, d'eau et d'une solution dans l'acide acétique de nitrate de bismuth pour réaliser une réaction de recombinaison pour obtenir P-C₃N₄/oxyde de graphène réduit/BiVO₄; et
le mélange du P-C₃N₄/oxyde de graphène réduit/BiVO₄, d'un liant et d'un solvant,
et l'application du liquide mélangé résultant sur la surface de la céramique conductrice pour obtenir un matériau catalytique en lumière visible;
dans lequel le P-C₃N₄ est préparé par un procédé comprenant le mélange de mélamine, de dihydrogénophosphate d'ammonium et d'eau, successivement la réalisation d'une réaction de polymérisation, d'un séchage et d'une calcination pour obtenir le P-C₃N₄.

5. Procédé selon la revendication 4, **caractérisé en ce que** la température du traitement de modification est 5-40°C et la durée est 9-13h.

6. Procédé selon la revendication 4, **caractérisé en ce que** la température de la réaction de recombinaison est 135-145°C et la durée est de 11-13h.

7. Procédé selon la revendication 4, **caractérisé en ce qu'**un rapport de la masse du liquide mélangé à l'aire de la céramique conductrice est de (1-2,5) mg: 1 cm².

8. Utilisation du matériau catalytique en lumière visible selon l'une quelconque des revendications 1-3 ou du matériau catalytique en lumière visible préparé par le procédé de préparation selon l'une quelconque des revendications 4-7 dans le traitement des eaux usées.
